(19) Europäisches Patentamt
European Patent Office
Office européen des brevets

(11) Numéro de publication: **0 197 859**
B1

(12) **FASCICULE DE BREVET EUROPEEN**

(45) Date de publication du fascicule du brevet:
28.12.88

(21) Numéro de dépôt: 86400712.5

(22) Date de dépôt: 02.04.86

(51) Int. Cl.⁴: **B 62 D 55/112**, B 60 G 15/12,
F 16 F 9/42

| E R R A T U M |

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | | LAUTET BERICHTIGT :<br>SHOULD READ :<br>DEVRAIT ETRE LU : |
|---|---|---|---|---|
| contenant un piston (1) | 4 | 6 | 39 | contenant un piston (7) |
| deren dem Kolben | 5 | 8 | 5 | deren dem Kolben (7) |

Tag der Entscheidung
über die Berichtigung )
Date of decision on )
rectification: ) 16.01.89
Date de décision portant )
sur modification: )

Ausgabe- und Veröffentlichungstag: )
Issue and publication )
date: ) 19.04.89
Date d'édition et de )
publication: )

Patbl.Nr.)

EPB no:) . 89/

Bull. no:)

Europäisches Patentamt

(19) European Patent Office

Office européen des brevets

(11) Numéro de publication: **0 197 859**
**B1**

(12) **FASCICULE DE BREVET EUROPEEN**

(45) Date de publication du fascicule du brevet:
**28.12.88**

(21) Numéro de dépôt: **86400712.5**

(22) Date de dépôt: **02.04.86**

(51) Int. Cl.⁴: **B 62 D 55/112**, B 60 G 15/12,
F 16 F 9/42

(54) Elément de suspension pour véhicule lourd.

(30) Priorité: **03.04.85 FR 8505067**

(43) Date de publication de la demande:
**15.10.86 Bulletin 86/42**

(45) Mention de la délivrance du brevet:
**28.12.88 Bulletin 88/52**

(84) Etats contractants désignés:
**DE GB IT**

(56) Documents cités:
**FR-A- 2 313 605**
**US-A- 3 444 787**
**US-A- 3 602 470**
**US-A- 3 614 125**
**US-A- 4 061 320**

**MACHINE DESIGN, vol. 55, no. 15, 30 juin 1983, pages
127,128, Cleveland, Ohio, US; "Mechanical drives
reference issue"**
**PRODUCT ENGINEERING, vol. 47, no. 6, juin 1976,
pages 33-36; "Plastic-base bearings can make
designing easier"**

(73) Titulaire: **S.A.M.M.- Société d'Applications des
Machines Motrices, Chemin de la Malmaison,
F-91570 Bièvres (FR)**

(72) Inventeur: **Joseph, Philippe, Quartier le Dègues Loriot
du Comtat, F-84200 Carpentras (FR)**

(74) Mandataire: **Bressand, Georges et al, c/o CABINET
LAVOIX 2 Place d'Estienne d'Orves, F-75441 Paris
Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La presente invention a pour objet un élément de suspension pour véhicule lourd, du type comportant un bras traversé par un fusée de roue du véhicule, articulé rotativement sur une partie fixe solidaire du châssis du véhicule avec interposition de moyens de roulement entre cette partie fixe et le bras rotatif, une chambre hydraulique étant ménagée dans le bras et contenant un piston coulissant sur lequel est articulée une bielle dont l'extrémité opposée au piston est de son côté articulée sur la partie fixe.

Dans les éléments de suspension connus de ce type pour véhicules lourds, les moyens de roulement sont des roulements à billes, qui subissent une usure rapide provoquée par la succession de petites vibrations ou oscillations du bras de suspension, en particulier lorsque le véhicule circule sur terrains accidentés. En effet, des efforts de torsion et de flexion très importants sont exercés par la roue sur les billes, en particulier des efforts de ripage latéral, qui font vibrer les billes et peuvent faire sauter leurs cages, ce qui entraîne la mise hors service de l'élément de suspension.

Par ailleurs, les extrémités de la bielle sont habituellement articulées au moyen de rotules de grandes dimensions pour pouvoir résister à des efforts très importants, et présentent donc un encombrement élevé, qui s'ajoute à l'encombrement du roulement à billes.

Un autre inconvénient est également observé dans les éléments de suspension connus de ce type: le laminage de l'huile entraîné par les oscillations successives du bras et les va-et-vient consécutifs du piston provoque un échauffement de l'huile. De ce fait, la membrane qui sépare habituellement l'huile du compartiment de gaz transmet au gaz la chaleur développée par le laminage de l'huile, de sorte que le gaz se dilate et que la garde au sol du véhicule est déréglée par augmentation de celle-ci. Inversement, lorsqu'au repos l'huile est froide, le gaz se contracte, de sorte que le piston se déplace et que la garde au sol est également déréglée, avec abaissement du véhicule.

Dans une autre suspension, connue du brevet US-A-3 602 470 et contenant les caractéristiques du préambule de la revendication 1, un palier lisse est utilisé. Ce palier lisse est constitué de deux coussinets et présente de ce fait une largeur élevée.

L'invention a pour but d'éliminer ces inconvénients.

A cet effet, suivant l'invention, le palier lisse est constitué par un seul coussinet ajouré sur une partie de sa circonférence pour permettre au bras d'osciller de part et d'autre d'une patte de la partie fixe faisant saillie radialement du coussinet et articulée sur la bielle.

Un matériau pour glissement à sec haute résistance sous fortes charges convenant particulièrement comme revêtement de ce coussinet est celui connu sous la marque «PYDANE», ce revêtement étant à base de fibres flourocarbonées «TEFLON» PTFE se présentant sous la forme de fils à multifilaments continus. Le coussinet ainsi revêtu peut résister à de très fortes charges, pouvant atteindre 400 N/mm² tout en présentant un encombrement considérablement réduit par rapport aux roulements à billes traditionnels.

Suivant une autre particularité de l'invention, qui résulte de la mise en œuvre d'un palier formé par le coussinet précité, la partie fixe présente un logement central adapté pour recevoir des moyens complémentaires, tels que par exemple un correcteur de la garde au sol du véhicule. En effet, la réduction d'encombrement des moyens de roulement permet de dégager cette place à l'intérieur de la partie fixe pour y loger des éléments qui autrement doivent être montés extérieurement à cette partie fixe, et augmentent donc l'encombrement général de l'élément de suspension.

Suivant un autre mode de réalisation de l'invention, dans lequel là bielle est articulée, d'une part sur le piston par l'intermédiaire d'une rotule ou d'un axe, et d'autre part sur la patte radiale de la partie fixe par un axe ou une rotule, la rotule est stellitée.

L'axe peut également être stellité, et en variante, la rotule ainsi que l'axe sont stellités.

Le stellitage de la rotule et/ou de l'axe d'articulation de la bielle présente l'avantage de permettre un fonctionnement sous très haute pression de contact, et éventuellement sans graissage dans le carter constitué par les parties entourant la rotule et l'axe.

D'autres particularités et avantages de l'invention apparaîtront au cours de la description qui va suivre, faite en référence aux dessins annexés qui en illustrent deux formes de réalisation à titre d'exemples non limitatifs:

la Figure 1 est une vue en coupe longitudinale avec élévation partielle d'un premier mode de réalisation de l'élément du suspension selon l'invention;

la Figure 2 est une vue en coupe transversale suivant II–II de la Figure 1;

la Figure 3 est une vue en perspective éclatée à échelle agrandie du coussinet de la Figure 1 et de la partie fixe sur laquelle il est monté;

la Figure 4 est une vue en coupe longitudinale avec élévation partielle analogue à la Figure 1 d'un second mode de réalisation de l'élément de suspension selon l'invention;

la Figure 5 est une vue en coupe partielle à échelle agrandie d'une partie de la suspension de la Figure 4.

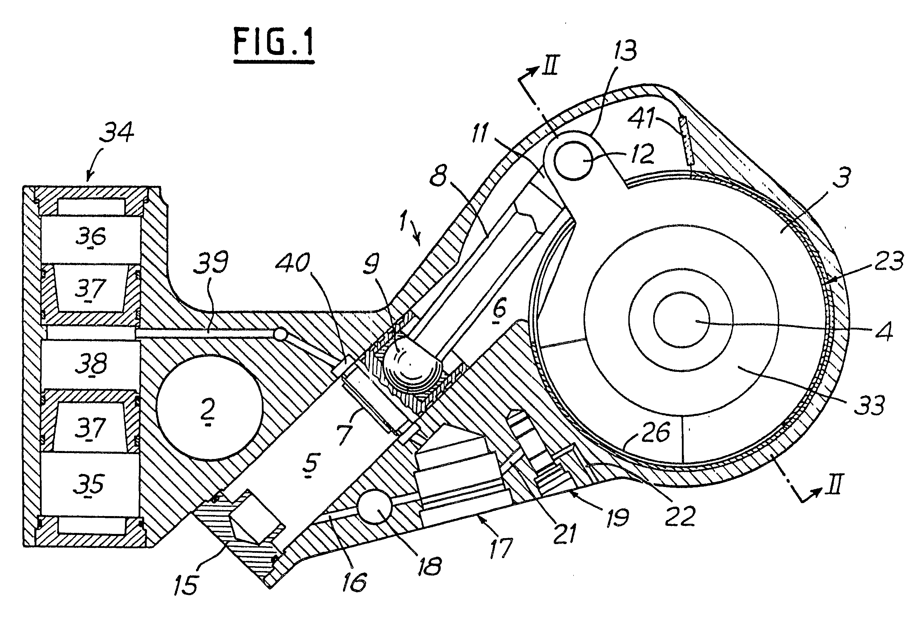

L'élément de suspension pour véhicule lourd représenté aux Figures 1 à 3 comporte un bras 1 traversé par une fusée de roue 2 du véhicule (la roue n'étant pas représentée), et est articulé rotativement sur une partie fixe 3 solidaire du châssis (non représenté) du véhicule. Cette partie fixe 3 est coaxiale à un axe 4 relié au châssis, des moyens de roulement étant prévus entre le bras rotatif 1 et la partie fixe 3.

Une chambre hydraulique 5 est ménagée dans le bras 1 et contient un piston 7 coulissant qui sépare la chambre hydraulique 5 d'un logement 6. Sur le piston 7, réalisé de façon connue en soi de manière à pouvoir coulisser de façon étanche dans la chambre 5, est articulée une bielle 8 dont l'extrémité opposée au piston 7 est de son côté articulée sur la partie fixe 3. Dans l'exemple décrit, l'articulation de la bielle 8 dans le piston 7 est constituée par une rotule terminale 9 solidaire de la bielle 8, tandis que l'extrémité opposée de celle-ci est formée par une chape 11 articulée sur un axe 12 fixé transversalement dans une patte 13 solidaire de la partie fixe 3 et faisant saillie radialement de celle-ci dans le logement 6 du bras 1 prolongeant la chambre hydraulique 5.

La chambre hydraulique 5 est fermée par un bouchon étanche 15 et alimentée par un circuit hydraulique fermé qui comporte une canalisation 16 débouchant d'une part dans la chambre 5, et d'autre part dans un amortisseur 17 d'une type connu en soi, comportant par exemple des rondelles élastiques et qui ne sera donc pas décrit. La canalisation 16 traverse un emplacement 18 pour un clapet de blocage éventuel, et l'amortisseur 17 communique avec un clapet d'isolement 19 réalisé de façon connue en soi par une canalisation 21. Le clapet 19 communique avec une canalisation 22, tous ces éléments de circuit d'alimentation en huile de la chambre 5 étant ménagés dans le bras 1 et alimentés par une source hydraulique non représentée.

Le piston 7 est avantageusement réalisé en bronze de manière connue en soi, et la partie fixe 3 est extérieurement cylindrique de part et d'autre de la patte radiale 13.

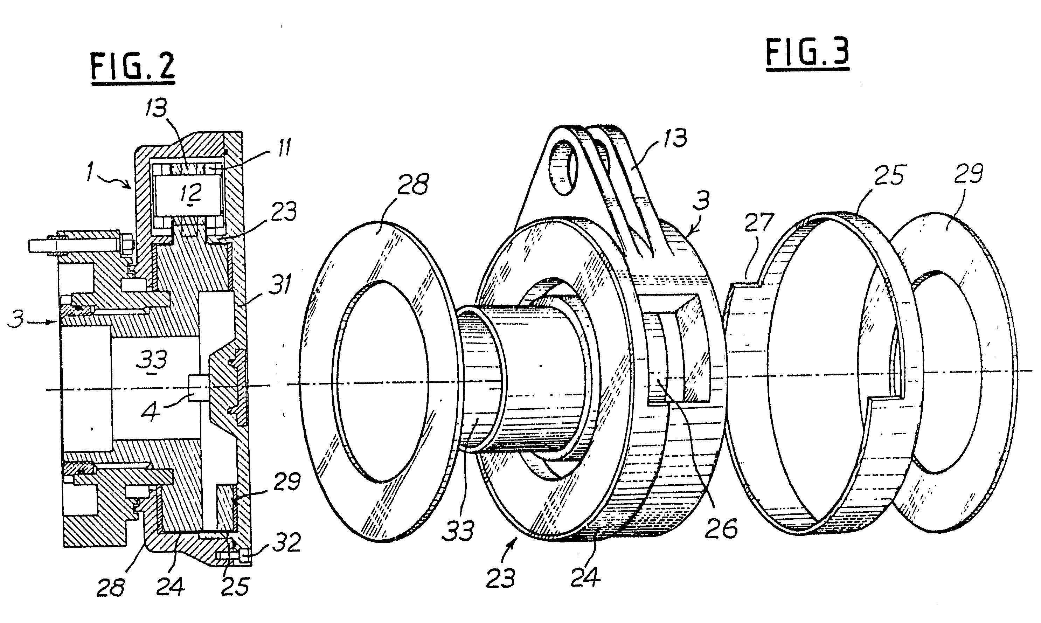

Suivant l'invention, les moyens de roulement sont constitués par un coussinet 23 de forme générale cylindrique, formant un palier qui enveloppe la partie fixe 3 et qui est revêtu intérieurement d'un matériau pour glissement à sec haute résistance, par exemple le matériau connu sous la marque commerciale «PYDANE». Le coussinet 23, visible plus particulièrement à la Figure 3, est ajouré pour permettre au bras 1 d'osciller de part et d'autre de la patte radiale 13 qui peut ainsi occuper des positions successives dans le logement 6.

Plus précisément, le coussinet 23 est constitué de deux coupelles cylindriques 24, 25 cylindriques, symétriques l'une de l'autre par rapport à un plan diamétral médian de la partie fixe 3, et dans chacune desquelles est ménagé un ajour circulaire 26, 27 sur un secteur angulaire approprié et qui est traversé radialement par la patte 13 (Figure 3). Complémentairement le coussinet 23 comporte deux butées annulaires latérales 28, 29 correspondantes, placées sur les côtes des coupelles 24, 25. Ces dernières se présent donc sous la forme de portions cylindriques dans lesquelles sont ménagées les découpes circulaires 26, 27 et sont dimensionnées de manière à pouvoir envelopper partiellement la partie fixe 3 lorsqu'elles sont montées sur celle-ci après avoir été fixées par tous moyens appropriés connus en soi au bras 1. Les découpes angulaires 26, 27 s'étendent de part et d'autre de la patte 13 et permettent au bras 1 d'osciller sur des amplitudes prédéterminées de part et d'autre de la patte 13. Comme les coupelles 24, 25, les butées 28, 29 sont revêtues intérieurement, c'est-à-dire sur leurs faces en contact avec la partie fixe 3, d'un matériau pour glissement à sec haute résistance.

La bielle 8 avec sa chape 11, ainsi que la butée 29 sont maintenues en place par un couvercle 31 fixé au bras 1 par des vis telles que 32 (Figure 2).

Suivant deux autres particularités de l'invention, la rotule 9 et/ou l'axe 12 sont stellités. En variante, les positions de la rotule 9 et de l'axe 12 peuvent être inversées et l'un de ces organes ou les deux peuvent être stellités.

Par ailleurs, la partie fixe 3 présente un volume intérieur 33 concentrique à l'axe fixe 4, et dont l'aménagement est rendu possible par la présence du coussinet de palier 23, dont l'encombrement est en effet considérablement moindre que celui d'un roulement à billes classique.

Le volume intérieur 33 peut ainsi recevoir des moyens complémentaires de l'élément de suspension, tel que par exemple un correcteur de la garde au sol du véhicule (qui ne fait pas partie de l'invention et ne sera donc pas décrit ici). Le logement intérieur 33 permet donc de diminuer l'encombrement général de l'élément de suspension, en évitant de monter les moyens complémentaires précités extérieurement à la partie fixe 3 comme dans les réalisations antérieures connues.

Selon une autre caractéristique de l'invention, l'élément de suspension est équipé d'un amortisseur 34 ménagé dans le bras 1, et qui comporte deux chambres de gaz 35, 36 séparées par deux piston 37, 38 coulissant librement dans leur chambre respective 35, 36 et délimitant entre eux une chambre hydraulique 38 reliée au circuit hydraulique de l'élément par une canalisation 39 agencée dans le bras 1. Cette canalisation 39 relie la chambre centrale 38 à l'amortisseur 17.

Le fonctionnement de l'élément de suspension qui vient d'être décrit est le suivant:

Durant les oscillations du bras 1 et de la fusée 2 autour de la partie fixe 3 et de l'axe 4 provoquées par les passages de la roue associée à cet élément sur des creux ou des bosses du terrain, le piston 7 exécute des va-et-vient dans la chambre hyraulique 5, tandis que la rotule 9 et la chape 11 pivotent respectivement dans le piston 7 et autour de l'axe 12, une buté intérieure 41 fixée au bras 1 dans son logement 6 venant en appui contre la patte 13 dans la position basse extrême du bras 1.

Lorsque la fusée 2 s'abaisse au passage d'un trou, elle entraîne le bras 1 en rotation autour de la partie fixe 3, à laquelle est lié le piston 7. De ce fait, le bouchon 15 s'éloigne du piston 7, ce qui augmente le volume de la chambre 5. L'huile de la chambre 38, maintenue sous pression par les chambres d'azote 35 et 36, est repoussée, par l'intermédiaire de la conduite 39 comportant un chambrage annulaire 40 formé autour de la chambre 5, dans l'amortisseur 17. Puis, l'huile laminée par ce dernier emprunte la conduite 16 et pénètre dans la chambre 5 pour compenser l'augmentation de volume de celle-ci.

Inversement, lorsque la fusée 2 s'élève au passage d'une bosse, on observe les mouvements inverses de ceux décrits ci-dessus: la chambre 5 diminue de volume, l'huile est chassée à travers la conduite 16 vers l'amortisseur 17, puis par la conduite 39 vers la chambre 38 qui augmente de volume, comprimant l'azote des chambres 35 et éventuellement 36.

En plus des avantages techniques précédemment mentionnés, l'invention présente les suivants:

— le coussinet ajouré 23 offre au roulement sur la partie fixe 3 une surface latérale nettement plus importante que les billes des roulements traditionnels, grâce à ses butées latérales 28, 29, qui permettent de reprendre les efforts latéraux et les moments de flexion;

— le stellitage de la rotule 9 et/ou de l'axe 12 permet de faire fonctionner l'élément de suspension sous une très haute pression de contact de ces moyens d'articulation, et le cas échéant, sans graissage;

— la présence des deux chambres de gaz 35, 36 permet l'obtention d'une raideur sous charge statique acceptable, de l'ordre du Herz, avec un facteur dynamique compatible avec des attaches normales (le facteur dynamique étant le rapport des efforts maximum à la charge statique, par exemple à titre indicatif 12 tonnes/3 tonnes = 4);

— un autre avantage des deux chambres de gaz 35, 36 consiste dans le fait qu'elles permettent d'éviter un point de rebroussement d'effort par rapport à la course lorsque l'essieu s'abaisse.

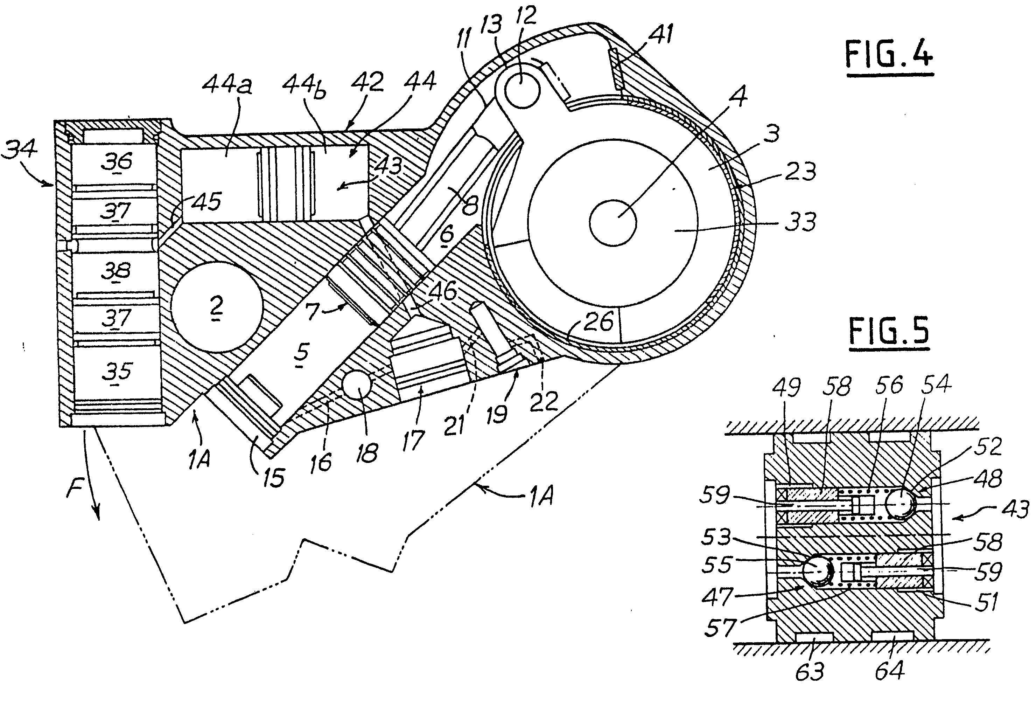

On décrira maintenant une seconde forme de réalisation de l'invention en référence aux Figures 4 et 5.

Cette forme de réalisation diffère de la précédente par l'adjonction à l'élément de suspension d'un dispositif de ségrégation thermique 42 extérieurement à la chambre hydraulique 5, ce dispositif 42 ayant pour fonction d'évacuer à l'extérieur de la chambre 5 la chaleur dégagée par le laminage de l'huile durant les oscillations du bras 1A.

Le dispositif de ségrégation 42 comprend un piston 43 monté librement coulissant dans une chambre 44 ménagée dans le bras 1A, par exemple comme dans le mode de réalisation décrit, entre la chambre hydraulique 38 d'une part, et de la conduite 46 reliée à l'amortisseur 17 d'autre part. Le piston 43 délimite ainsi deux compartiments hydrauliques 44a, 44b dont l'un 44a communique par une canalisation 45 avec la chambre hydraulique 38, tandis que l'autre 44b est relié à l'amortisseur 17 par une canalisation 46. Le piston 43 est muni de moyens de recentrage destinés à éviter tout risque de blocage du piston, à savoir dans l'exemple décrit deux clapets similaires 47, 48.

Chaque clapet 47, 48 comprend un alésage 49, 51 traversant le corps du piston 43 longitudinalement de part en part, un siège 52, 53 étant ménagé dans chaque alésage 49, 51 pour recevoir une bille respective 54, 55, appliquée sur son siège par un ressort correspondant 56, 57 maintenu dans l'alésage 49, 51 par une vis 58 munie d'un perçage 59.

Dans la périphérie du piston 43 sont enfin ménagées des gorges annulaires 63, 64 pouvant recevoir des bagues non représentées.

Le dispositif de ségrégation thermique 42 fonctionne comme suit: si le bras 1A s'élève au passage d'une bosse, l'huile est chassée de la chambre 5 vers l'amortisseur 17 qui l'échauffe. Cette huile chaude arrive par la conduite 46 dans la chambre 44b, repousse le piston 43, ce qui chasse l'huile froide du compartiment 44a, par l'intermédiaire de la conduite 45, dans la chambre 38. De ce fait, la chambre d'azote 35 et éventuellement la chambre 36 sont comprimées par cette huile froide, ce qui évite l'échauffement du gaz des chambres 35, 36.

Si le piston libre 43, par suite de fuites internes, vient à se décaler et à rentrer en butée au fond de la chambre 44a ou 44b, le clapet correspondant 47, 48 s'ouvre pour permettre le passage de la quantité d'huile nécessaire à son recentrage.

L'invention n'est pas limitée aux modes de réalisations décrits et peut comporter de nombreuses variantes d'exécution. Ainsi notamment le coussinet 23 peut être réalise de toute autre manière que celle décrite, de même que le piston 43 de ségrégation thermique, dans la mesure où les modifications apportées à ces organes assurent l'obtention de résultats équivalents.

**Revendications**

1. Elément de suspension pour véhicule lourd, comportant un bras (1) traversé par une fusée de roue (2) du véhicule, articulé rotativement sur une partie fixe (3) solidaire du châssis du véhicule avec interposition de moyens de roulement entre cette partie fixe (3) et le bras rotatif (1), une chambre hydraulique (5) étant ménagée dans le bras (1) et contenant un piston (1) coulissant sur lequel est articulée une bielle (8) dont l'extrémité opposée au piston (7) est de son côte articulée sur la partie fixe (3) les moyens de roulement étant constitués par un palier lisse (23) enveloppant la partie fixe (3) et revêtu intérieurement d'un matériau pour glissement à sec haute résistance, caractérisé en ce que le palier lisse est constitué par un seul coussinet (23) ajouré sur une partie de sa circonférence pour permettre au bras (1) d'osciller de part et d'autre d'une patte (13) de la partie fixe faisant saillie radialement du coussinet (23) et articulée sur la bielle (8).

2. Elément selon la revendication 1 dans lequel la partie fixe (3) est cylindrique, caractérisé en ce que le coussinet (23) est constitué de deux coupelles cylindriques (24, 25) symétriques l'une de l'autre par rapport à un plan diamétral médian et dans chacune desquelles est ménagé un ajour circulaire (26, 27) traversé radialement par la patte (13) de part et d'autre de laquelle s'étendent lesdits ajours (26, 27) afin de permettre au bras (1) d'osciller sur des amplitudes déterminées de part et d'autre de la patte (13), et deux butées annulaires latérales (28, 29) correspondantes sont placées sur les côtés des coupelles (24, 25).

3. Elément selon l'une des revendications 1 et 2 dans lequel la bielle (8) est articulée, d'une part sur le piston (7) par l'intermédiaire d'une rotule (9) ou d'un axe (12), et d'autre part sur la patte radiale (13) de la partie fixe (3) par un axe ou une rotule, caractérisé en ce que la rotule (9) est stellitée.

4. Elément selon la revendication 1 dans lequel la bielle (8) est articulée, d'une part sur le piston (7) par l'intermédiaire d'une rotule (9) ou d'un axe (12), et d'autre part sur la patte radiale (13) de la partie fixe (3) par un axe ou une rotule, caractérisé en ce que l'axe (12) est stellité.

5. Elément selon la revendication 1 dans lequel la bielle (8) est articulée d'une part sur le piston (7) par l'intermédiaire d'une rotule (9) ou d'un axe (12), et d'autre part sur la patte radiale (13) de la partie fixe (3) par un axe ou une rotule, caractérisé en ce que l'axe (12) et la rotule (9) sont stellités.

6. Elément selon l'une des revendications 1 à 5, caractérisé en ce que le bras rotatif (1) comporte un élément élastique (34) formé par deux chambres de gaz (35, 36) séparées par deux pistons (37) coulissant librement de manière étanche et qui délimitent entre eux une chambre hydraulique (38) reliée au circuit hydraulique d'alimentation de la chambre (5) du piston (7).

7. Elément selon l'une des revendications 1 à 6, caractérisé en ce que la partie fixe (3) présente un logement central (33) adapté pour recevoir des moyens complémentaires tels que par exemple un correcteur de la garde au sol du véhicule.

8. Elément selon l'une des revendications 6 et 7, caractérisé en ce qu'il est équipé d'un dispositif de ségrégation thermique (42) apte à évacuer à l'extérieur la chaleur dégagée par le laminage de l'huile durant les oscillations du bras rotatif (1), ce dispositif comprenant un piston (43) monté librement coulissant dans une chambre ménagée dans le bras (1A) et qui y délimite deux compartiments hydrauliques (44a, 44b) communiquant avec le circuit hydraulique de l'élément de telle sorte que l'un (44b) des compartiments reçoive l'huile échauffée par le laminage tandis que l'autre compartiment (44a) est rempli d'huile froide.

9. Elément selon la revendication 8, caractérisé en ce que le piston (43) de ségrégation thermique est muni de moyens de recentrage destinées à éviter tout risque de blocage du piston (43), par exemple deux clapets (47, 48) formés chacun d'une bille antiretour (54, 55) élastiquement appliquée sur un siège (52, 53) intérieur au piston (43), ces deux clapets (47, 48) autorisant le passage du liquide hydraulique d'un compartiment (44a, 44b) à l'autre lorsque le piston (43) est en butée dans l'un des compartiments (44a, 44b), pour recentrer automatiquement le piston (43).

**Patentansprüche**

1. Aufhängungselement für ein Schwerfahrzeug mit einem Arm (1), durch den quer ein Radachsschenkel (2) des Fahrzeuges verläuft und der drehbeweglich an einen festen massiven Teil (3) des Fahrzeugrahmens mit zwischen dem festen Teil (3) und dem Dreharm (1) angeordneter Lagereinrichtungen angelenkt ist, und mit einer hydraulischen Kammer (5), die im Arm (1) ausgespart ist und einen Gleitkolben (7) enthält, an den eine Pleuelstange (8) angelenkt ist, deren dem Kolben gegenüberliegendes Ende seinerseits an den festen Teil (3) angelenkt ist, wobei die Lagereinrichtungen aus dem Gleitlager (23) bestehen, das den festen Teil (3) umschliesst und innen mit einem Material mit hohem Trockengleitwiderstand ausgekleidet ist, dadurch gekennzeichnet, dass das Gleitlager aus einer einzelnen Lagerbuchse (23) besteht, die an einem Teil ihres Umfangs durchbrochen ist, damit der Arm (1) nach beiden Seiten einer Platte (13) des festen Teils (3) schwingen kann, die einen Vorsprung radial zur Lagerbuchse bildet und an die die Pleuelstange (8) angelenkt ist.

2. Element nach Anspruch 1, bei dem der feste Teil (3) zylindrisch ist, dadurch gekennzeichnet, dass die Lagerbuchse (23) aus zwei zylindrischen und zueinander bezüglich einer mittleren diametralen Ebene symmetrischen Kapseln (24, 25) besteht, in denen jeweils ein kreisförmiger Durchbruch (26, 27) ausgespart ist, durch den quer radial der Vorsprung (13) verläuft, auf dessen beiden Seiten die Durchbrüche (26, 27) verlaufen, damit der Arm (1) über bestimmte Amplituden auf beiden Seiten des Vorsprunges (13) schwingen kann, und dass zwei entsprechende seitliche Anschlagringe (28, 29) auf den Aussenseiten der Kapseln (24, 25) angeordnet sind.

3. Element nach Anspruch 1 und 2, bei dem die Pleuelstange (8) einerseits am Kolben (7) über ein dazwischen angeordnetes Kugelgelenk (9) oder eine Achse (12) und andererseits an den radialen Vorsprung (13) des festen Teils (3) über eine Achse oder ein Kugelgelenk angelenkt ist, dadurch gekennzeichnet, dass das Kugelgelenk (9) aus Stellit besteht.

4. Element nach Anspruch 1, bei dem die Pleuelstange (8) einerseits an den Kolben (7) über ein dazwischen liegendes Kugelgelenk (9) oder eine Achse (12) und andererseits an den radialen Vorsprung (13) des festen Teils (3) über eine Achse oder ein Kugelgelenk angelenkt ist, dadurch gekennzeichnet, dass die Achse (12) aus Stellit besteht.

5. Element nach Anspruch 1, bei dem die Pleuelstange (8) einerseits an den Kolben (7) über ein dazwischen liegendes Kugelgelenk (9) oder eine Achse (12) und andererseits an den radialen Vorsprung (13) des festen Teils (3) über eine Achse oder ein Kugelgelenk angelenkt ist, dadurch gekennzeichnet, dass die Achse (12) und das Kugelgelenk (9) aus Stellit bestehen.

6. Element nach einem der Ansprüche 1 bis 5, dadurch gekennzeichnet, dass der Dreharm (1) ein elastisches Element (34) aus zwei Gaskammern (35, 36) aufweist, die von zwei Kolben (37) getrennt sind, die frei und dicht gleiten und die dazwischen eine hydraulische Kammer (38) begrenzen, die mit einem hydraulischen Versorgungskreis der Kammer (5) des Kolbens (7) verbunden ist.

7. Element nach einem der Ansprüche 1 bis 6, dadurch gekennzeichnet, dass der feste Teil (3) eine zentrale Lagerkammer (33) bildet, die komplementäre Einrichtungen, wie beispielsweise eine Korrektureinrichtung für die Bodenfreiheit des Fahrzeuges, aufnehmen kann.

8. Element nach einem der Ansprüche 6 und 7, dadurch gekennzeichnet, dass es mit einer Wärmeabscheideeinrichtung (42) versehen ist, die durch das Umwälzen des Öls während der Schwingungen des Dreharmes (1) freigesetzte Wärme nach aussen ableiten kann, wobei diese Einrichtung einen Kolben (43) umfasst, der frei gleitend in einer Kammer angeordnet ist, die im Arm (1A) ausgespart ist, und der zwei hydraulische Abteile (44a, 44b) begrenzt, die mit dem Hydraulikkreis des Elementes derart verbunden sind, dass die eine (44b) der Abteile das durch das Umwälzen erwärmte Öl aufnimmt, während das andere Abteil (44a) mit kaltem Öl gefüllt ist.

9. Element nach Anspruch 8, dadurch gekennzeichnet, dass der Wärmeabscheidekolben (43) mit Zentriereinrichtungen, um jede Gefahr des Blockierens eines Kolbens (43) auszuschliessen, beispielsweise mit zwei Ventilen (47, 48) versehen ist, die jeweils in Form einer Rückschlagkugel (54, 55) ausgebildet sind, die elastisch an einem Sitz (52, 53) im Inneren des Kolbens (43) anliegen, wobei die beiden Ventile (47, 48) den Durchgang der hydraulischen Flüssigkeit von einem Abteil (44a, 44b) zum anderen zulassen, wenn der Kolben (43) in einem der Abteile (44a, 44b) anschlägt, um den Kolben (43) automatisch wieder zu zentrieren.

## Claims

1. A suspension element for a heavy vehicle, comprising an arm (1) which is traversed by a wheel stubaxle (2) of the vehicle and is rotatably articulated on a fixed part (3) integral with the vehicle chassis with interposition of antifriction bearing means between this fixed part (3) and the rotary arm (1), a hydraulic chamber (5) being provided in the arm (1) and containing a sliding piston (7) on which there is articulated a connecting rod (8), whose end remote from the piston (7) is in turn articulated on the fixed part (3), the antifriction bearing means being constituted by a sliding bearing (23) surrounding the fixed part (3) and internally coated with material for high resistance dry sliding, characterised in that the sliding bearing is constituted by a single bearing bush (23) which is perofrated over a portion of its circumference to enable the arm (1) to oscillate on either side of a lug (13) of the fixed part projecting radially from the bearing bush (23) and articulated on the connecting rod (8).

2. An element according to claim 1, in which the fixed part (3) is cylindrical, characterised in that the bearing bush (23) is constituted by two cylindrical shells (24, 25) which are symmetrical to one another about a median diametral plane and in each of which there ist provided a circular aperture (26, 27) traversed radially by the lug (13) on either side of which said apertures (26, 27) extend to enable the arm (1) to oscillate over defined regions on either side of the lug (13), and two corresponding lateral annular thrust rings (28, 29) are placed on the sides of the shells (24, 25).

3. An element according to one of claims 1 and 2, in which the connecting rod (8) is articulated, on the one hand, to the piston (7) by means of a ball joint (9) or a pivot pin (12) and, on the other hand, to the radial lug (13) of the fixed part (3) by a pivot pin or a ball joint, characterised in that the ball joint (9) is coated with stellite.

4. An element according to claim 1, in which the connecting rod (8) is articulated, on the one hand, to the piston (7) by means of a ball joint (9) or a pivot pin (12) and, on the other hand, to the radial lug (13) of the fixed part (3) by a pivot pin or a ball joint, characterised in that the pivot pin (12) is coated with stellite.

5. An element according to claim 1, in which the connecting rod (8) is articulated, on the one hand, to the piston (7) by means of a ball joint (9) or a pivot pin (12) and, on the other hand, to the radial lug (13) of the fixed part (3) by a pivot pin or a ball joint, characterised in that the pivot pin (12) and the ball joint (9) are coated with stellite.

6. An element according to one of claims 1 to 5, characterised in that the rotary arm (1) comprises an elastic element (34) formed by two gas chambers (35, 36) separated by two pistons (37) which slide freely in a sealed manner and define between them a hydraulic chamber (38) connected to the hydraulic circuit supplying the chamber (5) of the piston (7).

7. An element according to one of claims 1 to 6, characterised in that the fixed part (3) has a central cavity (33) adapted to receive complementary means such as, for example, a means for controlling the ground clearance of the vehicle.

8. An element according to one of claims 6 and 7, characterised in that it is equipped with a thermal segregation device (42) capable of discharging to the exterior heat given off by the drawing of oil during the oscillations of the rotary arm (1), this device comprising a piston (43) which is mounted in freely sliding manner in a chamber provided in the arm (1A) and defines there two hydraulic circuit of the element so that one (44b) of the compartments receives the oil heated by said drawing while the other compartment (44a) is filled with cool oil.

9. An element according to claim 8, characterised in that the thermal segregation piston (43) is equipped with re-centering means designated to prevent any risk of the piston (43) jamming, for example two valves (47, 48) each formed by a check ball (54, 55) elastically biased against a seat (52, 53) inside the piston (43), these two valves (47, 48) allowing the passage of the hydraulic liquid from one compartment (44a, 44b) to the other when the piston (43) abuts against one of the compartments (44a, 44b) so as automatically to re-centre the piston (43).

FIG.1

FIG.2

FIG.3

EP 0197859 B1

FIG.4

FIG.5

EP 0197859 B1